# EUROPEAN PATENT APPLICATION

(11) **EP 4 676 016 A1**
(43) Date of publication of application: **07.01.2026**
(21) Application number: 25153740.3
(22) Date of filing: 24.01.2025
(51) Int. Cl.: H04N 1/00

(54) **DIAGNOSTIC SYSTEM, PROGRAM, AND DIAGNOSTIC METHOD**

(30) Priority: 05.07.2024 JP 2024108943
(71) Applicant: Fujifilm Business Innovation Corp., Tokyo 107-0052 (JP)
(72) Inventor: TANAKA, Yuki, Yokohama (JP); OKI, Tomoya, Yokohama (JP); MIYAMORI, Shinya, Yokohama (JP)
(74) Representative: Meissner Bolte Partnerschaft mbB

(57) **Abstract**

A diagnostic system includes: one or more processors configured to: acquire an image formed by an image forming apparatus; detect a defect in the image by analyzing the acquired image; identify candidates for maintenance related to the detected defect; and output a diagnosis result indicating the candidates for the maintenance in an order that is determined depending on whether a user of the image forming apparatus is enabled to execute the maintenance.

## Description

### Background

### (i) Technical Field

The present disclosure relates to a diagnostic system, a program, and a diagnostic method.

### (ii) Related Art

Japanese Unexamined Patent Application Publication No. 2020-199704 discloses electronic equipment having a diagnostic function that acquires diagnostic information on a damaged component responsive to an occurring error and a step to be taken on the damaged component.

Diagnostic systems monitoring the state of an image forming apparatus and determining a location of a defect are available. A technique to improve an accuracy of identifying a component to be replaced is available in such a system. In response to the occurrence of an error in the image forming apparatus, the technique provides an instruction to replace a component having a higher possibility of defect in view of a component replacement log and improves the accuracy of identifying the component to be replaced. However, the related art may improve the accuracy of identifying the component to be replaced but has still difficulty in reducing engineer visits to a user when maintenance is executed in view of a diagnostic result of the image forming apparatus.

### Summary

Accordingly, it is an object of the present disclosure to provide a diagnostic system, a program, and a diagnostic method that reduce engineer visits to a user when maintenance is executed in view of a diagnostic result.

According to a first aspect of the present disclosure, there is provided a diagnostic system including: one or more processors configured to: acquire an image formed by an image forming apparatus; detect a defect in the image by analyzing the acquired image; identify candidates for maintenance related to the detected defect; and output a diagnosis result indicating the candidates for the maintenance in an order that is determined depending on whether a user of the image forming apparatus is enabled to execute the maintenance.

In the diagnostic system according to a second aspect of the disclosure in view of the first aspect, the one or more processors are configured to output, together with the diagnosis result, whether the user of the image forming apparatus is enabled to execute the maintenance.

In the diagnostic system according to a third aspect of the disclosure in view of the second aspect, the one or more processors are configured to cause a device of the user or of an engineer to display the diagnosis result.

In the diagnostic system according to a fourth aspect of the disclosure in view of the first aspect, the one or more processors are configured to determine the order in accordance with a degree of the defect.

In the diagnostic system according to a fifth aspect of the disclosure in view of the fourth aspect, the one or more processors are configured to output, if the degree of the defect is lower than a specific threshold, the diagnosis result indicating the candidates for the maintenance in the order starting from a candidate for the maintenance that the user is enabled to execute.

In the diagnostic system according to a sixth aspect of the disclosure in view of the first aspect, the one or more processors are configured to determine the order in accordance with a difficulty level of the maintenance.

In the diagnostic system according to a seventh aspect of the disclosure in view of the sixth aspect, the one or more processors are configured to output, if the difficulty level of the maintenance is lower than a specific threshold, the diagnosis result indicating the candidates for the maintenance in the order starting from a candidate for the maintenance that the user is enabled to execute.

In the diagnostic system according to an eighth aspect of the disclosure in view of the sixth aspect, the one or more processors are configured to determine the order by attaching a specific weight to the degree of the defect and the difficulty level of the maintenance.

According to a ninth aspect of the present disclosure, there is provided a program causing one or more computers to execute a process, the process including: acquiring an image formed by an image forming apparatus; detecting a defect in the image by analyzing the acquired image; identifying candidates for maintenance related to the detected defect; and outputting a diagnosis result indicating the candidates for the maintenance in an order that is determined depending on whether a user of the image forming apparatus is enabled to execute the maintenance.

According to a tenth aspect of the present disclosure, there is provided a diagnostic method including: acquiring an image formed by an image forming apparatus; detecting a defect in the image by analyzing the acquired image; identifying candidates for maintenance related to the detected defect; and outputting a diagnosis result indicating the candidates for the maintenance in an order that is determined depending on whether a user of the image forming apparatus is enabled to execute the maintenance.

According to the first, ninth, and tenth aspects of the disclosure, the diagnostic system may reduce engineer visits to the user when the maintenance is executed in view of the diagnostic result of the image forming apparatus.

According to the second aspect of the disclosure, the diagnostic system may output to the outside whether the user is enabled to execute the maintenance.

According to the third aspect of the disclosure, the user or the engineer may recognize whether the user is enabled to execute the maintenance.

According to the fourth aspect of the disclosure, the diagnostic system may determine the necessity of the visit of the engineer for each defect.

According to the fifth aspect of the disclosure, the diagnostic system may reduce engineer visits if the degree of the defect is lower.

According to the sixth aspect of the disclosure, the diagnostic system may determine the usefulness of the visit of the engineer.

According to the seventh aspect of the disclosure, the diagnostic system may reduce the frequency of visits of the engineer by encouraging the user to execute the maintenance.

According to the eighth aspect of the disclosure, the program may change the magnitude of each of the degree of the defect and the difficulty level of the maintenance according to which the necessity of the visit of the engineer is determined.

### Brief Description of the Drawings

An exemplary embodiments of the present disclosure will be described in detail based on the following figures, wherein:
Fig. 1 illustrates a configuration example of a diagnosis system of an exemplary embodiment of the disclosure;
Fig. 2 illustrates a hardware configuration example of an image forming apparatus and a diagnostic server;
Fig. 3 illustrates a hardware configuration example of a computer used as a user terminal or an engineer terminal;
Fig. 4 illustrates a functional configuration example of the diagnostic server;
Fig. 5A illustrates a display example of diagnosis results where the exemplary embodiment is not applied and Fig. 5B illustrates a display example of diagnosis results where the exemplary embodiment is applied;
Fig. 6 illustrates a process flow example of the diagnostic server; and
Fig. 7 illustrates an example of weights that are stored in association with a method of maintenance on a maintenance information memory.

### Detailed Description

An exemplary embodiment of the disclosure is described below with reference to the attached drawings.

### Configuration of Diagnostic System

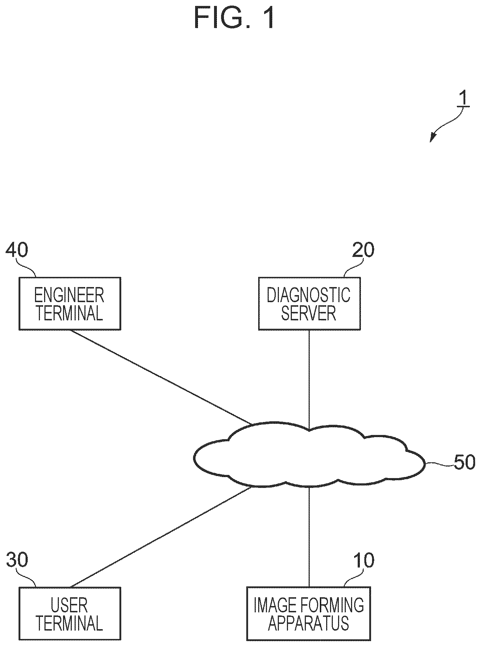

Fig. 1 illustrates the configuration example of a diagnostic system 1 of the exemplary embodiment. The diagnostic system 1 includes an image forming apparatus 10, diagnostic server 20, user terminal 30, and engineer terminal 40. The image forming apparatus 10, diagnostic server 20, user terminal 30, and engineer terminal 40 are interconnected to each other via a network 50.

The image forming apparatus 10 has a printing function that forms an image on a recording medium, such as paper, and outputs the recording medium as a printed document. The image forming apparatus 10 has not only the printing function but also a scanning function that reads an image, for example, on an original document. The functions have cited for exemplary purposes only and another function may also be included.

When the image formed by the image forming apparatus 10 has a defect, a user of the image forming apparatus 10 scans the image and then transmits the scanned image to the diagnostic server 20. The transmission of the image may be executed by the image forming apparatus 10 or by another apparatus having the scanning function.

The diagnostic server 20 acquires the image formed by the image forming apparatus 10 and detects a defect by analyzing the acquired image. The diagnostic server 20 then identifies candidates for maintenance related to the detected defect and determines a display order according to which the candidates of maintenance are displayed in a diagnosis result. The display order is determined in accordance with whether the user of the image forming apparatus 10 is enabled to execute the maintenance. The diagnosis result is output to, for example, the engineer terminal 40. The diagnosis result may be output to the user terminal 30.

The function of the diagnostic server 20 may be implemented, for example, by a computer. The diagnostic server 20 may include a single computer or multiple computers operating in distributed processing.

The user terminal 30 is used by the user of the image forming apparatus 10. The user of the image forming apparatus 10 may recognize the candidates for maintenance from the diagnosis result displayed on the user terminal 30.

The engineer terminal 40 is used by an engineer in charge of the image forming apparatus 10. The engineer may recognize the candidates for maintenance from the diagnosis result displayed on the engineer terminal 40.

Each of the user terminal 30 and engineer terminal 40 may be implemented, for example, by a computer, tablet information terminal, or another information processing apparatus. For example, the operation panel of the image forming apparatus 10 may be used as the user terminal 30.

The network 50 is an information communication network that supports communication of the image forming apparatus 10, diagnostic server 20, user terminal 30, and engineer terminal 40. As long as the network 50 is capable of exchanging data, the network 50 is limited to any type and, for example, may be the Internet, local area network (LAN), wide area network (WAN), or the like. The communication network used for data communication may be a wired network or an wireless network. The apparatuses may be interconnected to each other via multiple networks and the communication network.

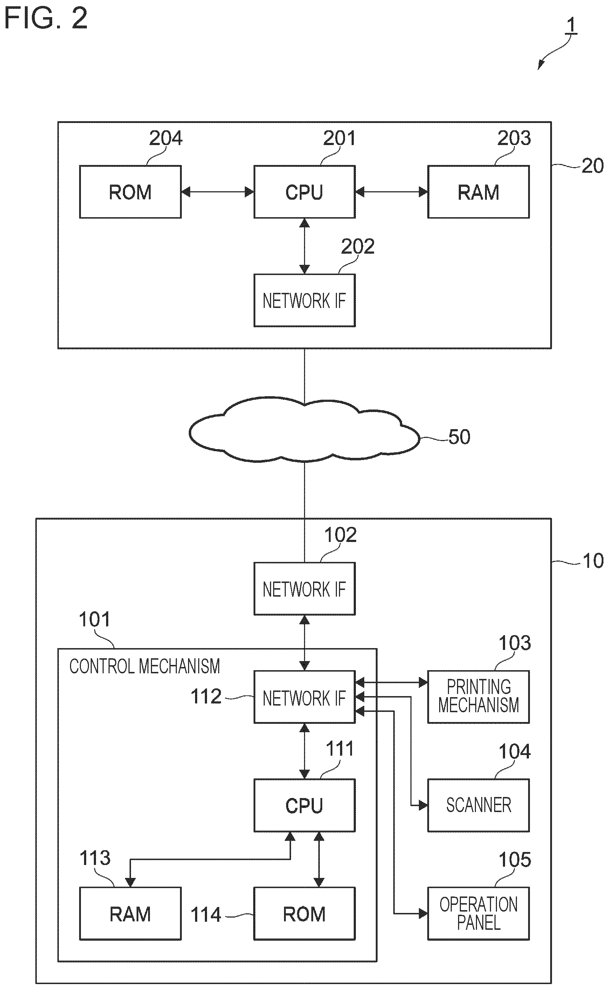

Fig. 2 illustrates a hardware communication example of the image forming apparatus 10 and diagnostic server 20.

The image forming apparatus 10 includes a control mechanism 101 controlling the operation of the image forming apparatus 10 and a network interface (IF) 102 used in communication with an external apparatus. The image forming apparatus 10 further includes a printing mechanism 103 printing an image on an recording medium, scanner 104 reading an image from an original document, and operation panel 105 including a touch panel.

The control mechanism 101 includes a central processing unit (CPU) 111, network IF 112, random-access memory (RAM) 113, and read-only memory (ROM) 114. The RAM 113 is a volatile memory that is used as a working area when the CPU 111 executes a program. The ROM 114 is a non-volatile memory that that stores the program executed by the CPU 111 and other data. The CPU 111 uses the RAM 113 as the working area and executes the program read from the ROM 114.

The image forming apparatus 10 transmits, for example, an image read by the scanner 104 to the diagnostic server 20 via the network IF 102.

The diagnostic server 20 includes a CPU 201, RAM 203, and ROM 204. The CPU 201 uses the RAM 203 as a working area and executes a program read from the ROM 204. The diagnostic server 20 further includes a network IF 202 used for connection with the network 50. The network IF 202 is used to communicate with an external apparatus via the network 50. The CPU 201 is an example of a processor.

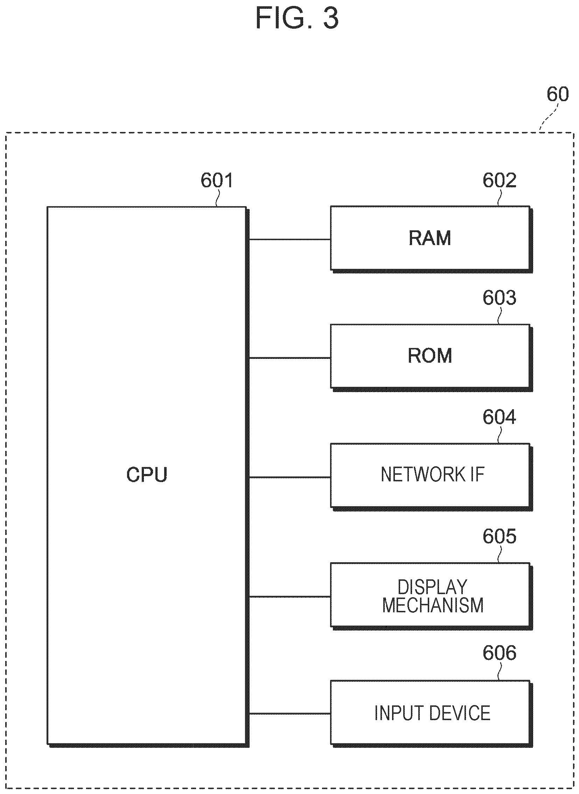

Fig. 3 illustrates a hardware configuration example of a computer 60 that is used as the user terminal 30 or the engineer terminal 40. The computer 60 includes a CPU 601, RAM 602, and ROM 603. The CPU 601 uses the RAM 602 as a working area and executes a program read from the ROM 603.

The computer 60 further includes a network IF 604 used for connection with the network 50, and a display mechanism 605 used to display an output on a display. The computer 60 further includes an input device 606 that includes a touch panel and the like and is operated by a user executing an input operation.

### Functional Configuration of Diagnostic Server

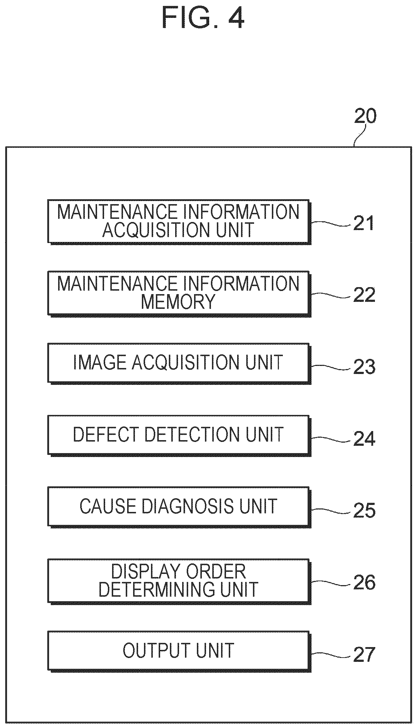

Fig. 4 illustrates a functional configuration example of the diagnostic server 20. The diagnostic server 20 includes, as functions to be executed by the CPU 201 as a processor, maintenance information acquisition unit 21, maintenance information memory 22, image acquisition unit 23, defect detection unit 24, cause diagnosis unit 25, display order determining unit 26, and output unit 27.

The maintenance information acquisition unit 21 acquires information on maintenance. The maintenance information acquisition unit 21 acquires the information on the maintenance from, for example, the engineer terminal 40. An engineer inputs the information on the maintenance from the engineer terminal 40 and registers the information on the maintenance on the diagnostic server 20. The maintenance information acquisition unit 21 may acquire from an external server (not illustrated) the information on the maintenance stored on the external server.

The information on the maintenance includes the type of a defect in an image, the image, a method of maintenance, and a difficulty level of maintenance. The information on the maintenance further includes predetermined weights used to determine a display order. The weight is used to calculate a priority level that is used to determine the display order of multiple candidates of maintenance. The calculation of the priority level and the weights are described in detail below.

The information on the maintenance acquired by the maintenance information acquisition unit 21 is stored on the maintenance information memory 22.

The information on the maintenance is stored in association with each type of the image forming apparatus 10 on the maintenance information memory 22. The types of the image forming apparatuses 10 include, for example, a multi-function apparatus and a printer. The information on the maintenance is pre-stored on the maintenance information memory 22 before the diagnostic server 20 starts a diagnostic process. The diagnostic server 20 executes the diagnostic process using information stored on the maintenance information memory 22.

The types of defects in images include, for example, image roughness, occurrence of streaks, and occurrence of unevenness of density of image. According to each type of image defects, a corresponding image is stored on the maintenance information memory 22.

An image responsive to a type of a defect is stored in association with a degree of the defect on the maintenance information memory 22. The degree of the defect is obtained by quantifying good/bad rating of an image when the image is visually inspected. A higher degree of the defect signifies a more serious defect. The maintenance information memory 22 stores multiple images that are associated with the degrees of the defects on a per defect type basis. The maintenance information memory 22 stores the multiple images ranging from an image having a lower degree of defect to an image having a higher degree of defect.

The degree of a defect is determined in accordance with indexes, such as the magnitude and the location of the defect, the frequency of occurrence of the defect, and the presence or absence of periodicity of the defect.

For example, if a streak appears in an image, the degree of the defect may be determined in accordance with not only the magnitude of the streak but also the location of the streak. The frequency of occurrence of the defect and the presence or absence of the periodicity of the defect may serve as a basis in determining the degree of the defect. The degree of the defect serves as comparison criteria in image analysis.

A method of maintenance is stored in association with the type of the defect in an image. The method of maintenance includes, for example, a component to be replaced and a method of adjustment. Each method of maintenance is stored in association with whether a user is enabled to execute the method of maintenance.

The difficulty level of the maintenance is determined by indexes, such as the type of the image forming apparatus 10, user of the image forming apparatus 10, skill of an engineer in charge, and size of a work scale. The maintenance information memory 22 stores these pieces of information as information related to the difficulty level of the maintenance.

The maintenance information memory 22 stores, for example, the type of the image forming apparatus 10 in association with information on the user holding the image forming apparatus 10. When a defect occurs in an image, information on skill of an engineer in charge of maintenance of the image forming apparatus 10 is also stored in association with the type of the image forming apparatus 10 and the information on the user on the maintenance information memory 22. The work scale and the size of the component to be replaced are also stored in association with the method of maintenance.

The information on the user of the image forming apparatus 10 includes, for example, a residential area of the user, usage log of the image forming apparatus 10, and the like. Whether the residential area is in a metropolitan area or a countryside and whether the usage log is long or short may serve as a factor determining the difficulty level of the maintenance.

The information on the skill of the engineer includes years of experience and qualifications of the engineer. The skill of the engineer in charge of the maintenance of the image forming apparatus 10 having the defect in the mage serves as a factor determining the difficulty level of the maintenance.

The information on the work scale includes the number of persons executing maintenance and the number of steps of the maintenance. The information on the size of the component to be replaced incudes the weight and width of the component to be replaced. These factors also serve as a factor determining the difficulty level of the maintenance.

The maintenance information memory 22 also stores in association with the method of the maintenance a predetermined weight used to determine the display order.

The image acquisition unit 23 acquires an image formed by the image forming apparatus 10. The image acquisition unit 23 acquires, for example, an image scanned by the user of the image forming apparatus 10 and then transmitted from the image forming apparatus 10.

The defect detection unit 24 analyzes the image acquired by the image acquisition unit 23 (hereinafter referred to as an "acquired image") and detects a defect in the acquired image. The defect detection unit 24 detects the type, magnitude, and location of an occurring defect, frequency of occurrence of the defect, and presence or absence of periodicity of the defect.

The cause diagnosis unit 25 diagnoses the cause of the defect detected by the defect detection unit 24. In accordance with the information on the maintenance stored on the maintenance information memory 22, the cause diagnosis unit 25 identifies a candidate for maintenance responsive to the defect in the acquired image. The cause diagnosis unit 25 identifies, for example, the component to be replaced and the method of adjustment.

The display order determining unit 26 determines an order according to which candidates of maintenance are displayed. The display order determining unit 26 determines the display order depending on whether the user of the image forming apparatus 10 is enabled to execute the maintenance.

The display order determining unit 26 calculates, for example, a priority level of each identified candidate for the maintenance and determines the display order from high to low priority level. The priority level is calculated in accordance with, for example, the degree of the defect and the difficulty level of the maintenance.

The degree of the defect is determined in accordance with indexes, such as the magnitude and the location of the defect, the frequency of occurrence of the defect, and the presence or absence of periodicity of the defect. For example, these indexes are determined by comparing the image stored on the maintenance information memory 22 with the acquired image.

The difficulty level of the maintenance may be determined by indexes, such as the type of the image forming apparatus 10, the user of the image forming apparatus 10, the skill of the engineer in charge, the size of the work scale, and the size of the component to be replaced. The display order determining unit 26 determines the degree of the defect and the difficulty level of the maintenance.

The display order determining unit 26 determines the display order by attaching predetermined weights to the degree of the defect and the difficulty level of the maintenance. The display order determining unit 26 calculates the priority level of each piece of maintenance, for example, using the weights and determines the display order of the maintenance from high to low priority level.

If the degree of the defect is lower than a predetermined threshold, the display order determining unit 26 may determines the display order of the maintenance from a piece of maintenance that the user is enabled to execute. If the difficulty level of the determined piece of maintenance is lower than a predetermined threshold, the display order determining unit 26 may determine the display order from a piece of maintenance that the user is enabled to execute.

The output unit 27 outputs a diagnostic result where the candidates for maintenance are displayed in an order determined by the display order determining unit 26. The output unit 27 outputs the diagnosis result to, for example, the engineer terminal 40. The output unit 27 may output the diagnosis result to the user terminal 30. The output unit 27 may be configured to output to the user terminal 30 only a candidate for maintenance executable by the user.

The output unit 27 is also configured to output the diagnosis result together with information on whether the maintenance is executable by the user.

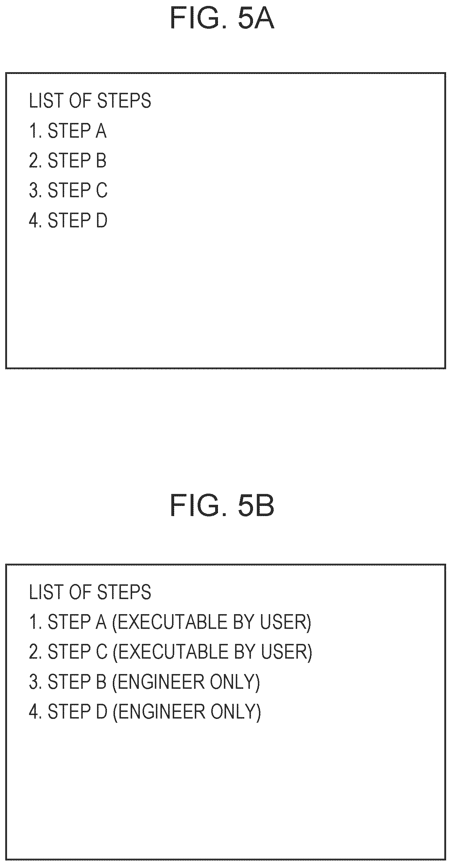

Fig. 5A illustrates a display example of the diagnosis result where the exemplary embodiment is not applied and Fig. 5B illustrates a display example of the diagnosis result where the exemplary embodiment is applied. The diagnosis results illustrated in Figs. 5A and 5B are displayed, for example, on the display screen of the engineer terminal 40.

Figs. 5A and 5B illustrate the display examples where a step A, step B, step C, and step D are identified as candidates for maintenance. The steps A and C may be executable by the user and the steps B and D may be handled by the engineer.

If the exemplary embodiment is not applied, each candidate for maintenance is displayed as illustrated in Fig. 5A regardless of whether or not the candidate is executable by the user. On the other hand, if the exemplary embodiment is applied, information as to whether or not the candidate is executable by the user is displayed together as illustrated in Fig. 5B. Referring to Fig. 5B, a candidate for maintenance executable by the user is displayed with priority. The example in Fig. 5B is displayed for exemplary purposes only and, for example, a candidate for maintenance executable by the engineer may be displayed with priority.

### Process Flow of Diagnostic Server

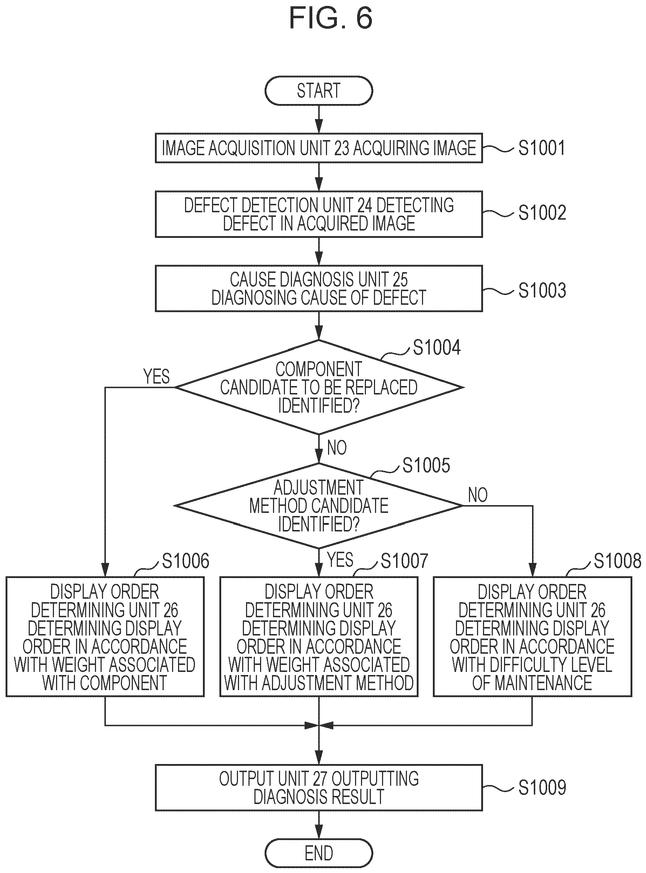

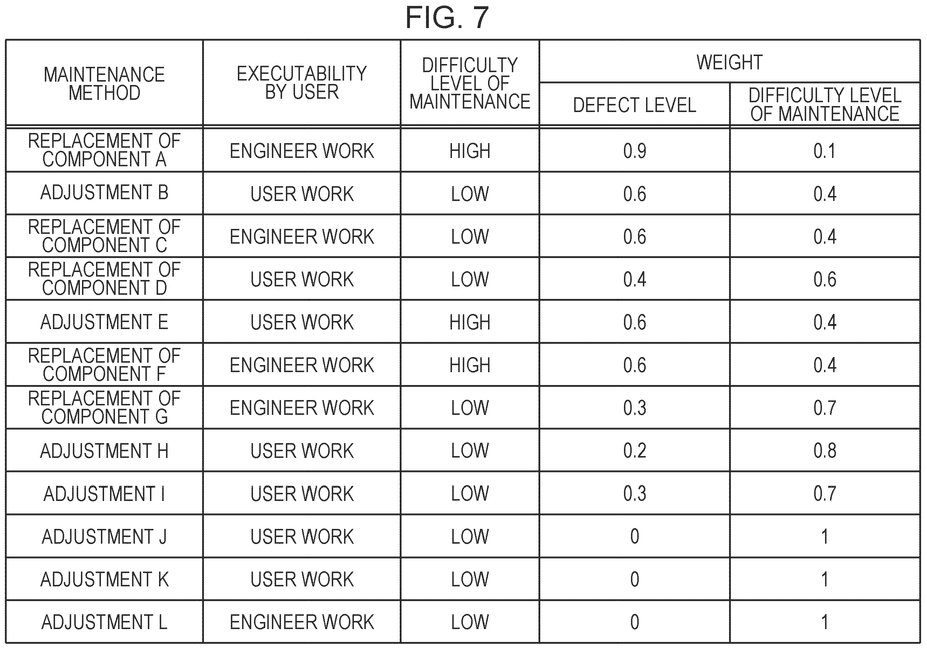

Process flow of the diagnostic server 20 performed with the image forming apparatus 10 transmitting a scan image to the diagnostic server 20 is described with reference to Figs. 6 and 7.

Fig. 6 illustrates the process flow of the diagnostic server 20. Fig. 7 illustrates an example of weights that are stored in association with a method of maintenance on the maintenance information memory 22.

Referring to Fig. 6, the image acquisition unit 23 first acquires an image (step S1001). The image acquisition unit 23 acquires the image transmitted by the user of the image forming apparatus 10.

The defect detection unit 24 then detects a defect in the acquired image (step S1002). The defect detection unit 24 detects the defect in the acquired image through image analysis.

The cause diagnosis unit 25 diagnoses the cause of the defect (step S1003). The cause diagnosis unit 25 identifies, as a candidate for maintenance for the defect in the acquired image, a component to be replaced and a candidate for a method of adjustment. When the cause diagnosis unit 25 has identified the candidate of the component to be replaced (yes in step S1004), the display order determining unit 26 determines the display order in accordance with the weight associated with the component (step S 1006).

Step S1006 is described in detail below. The defect in the acquired image may have a periodicity that matches the rotation period of the component A. In this case, the cause diagnosis unit 25 identifies the component A as a candidate of a component to be replaced. The cause diagnosis unit 25 may now also identify the components B and C as other candidates for maintenance. In such a case, the display order determining unit 26 calculates the priority levels of the replacements of the components A, B, and C and determines the display order from high to low priority level.

The weights used to calculate the priority levels are predetermined on each method of maintenance as illustrated in Fig. 7. The priority level is calculated by quantizing the degree of the defect and the difficulty level of the maintenance and summing products that are obtained by multiplying the quantized degree of the defect and the quantized difficulty level respectively by weights. For example, the priority level of replacing the component A is calculated in accordance with ((degree of defect) x 0.9 + (difficulty level of maintenance) x 0.1).

As illustrated in Fig. 7, the difficulty level of the maintenance involved in replacing the component A is high and the adjustment B and the difficulty level of the maintenance involved in replacing the component C are low. The difficulty levels of maintenance illustrated in Fig. 7 are determined by indexes, such as the information on the user of the image forming apparatus 10 having the defect and the skill of the engineer in charge. For example, even if component replacement is a simple job, the difficulty level of the maintenance may be determined to be "high" in view of another index.

The difficulty level of the maintenance is categorized to two levels, high or low, for simplicity of explanation as illustrated in Fig. 7, and 100 for high and 0 for low is used as values of the difficulty level in the calculation of the priority level. The difficulty level of the maintenance may be calculated as a continuous value and then used to calculate the priority level.

The degree of the defect is determined in accordance with indexes, such as the magnitude and the location of the defect, the frequency of occurrence of the defect, and the presence or absence of periodicity of the defect. Given the same defect, an index considered as having a greater effect is different depending on the component to be replaced and the method of adjustment and the degree of the defect is determined in accordance with the different index.

When the component A is replaced, an index of periodicity in which the defect matches the component A is considered as having a greater effecter and the degree of the defect is determined to be a relatively higher value. On the other hand, the component B and the replacement of the component C have no match in periodicity with the defect. The degrees of the defect are lower than in the replacement of the component A.

The replacement of the component A is thus determined to be a value higher than in the adjustment B and the replacement of the component C. The weights used to calculate the priority level in the replacement of the component A are 0.9 for the degree of the defect and 0.1 for the difficulty level of the maintenance. The priority level in the replacement of the component A is calculated to be higher than the priority level in the adjustment B and the replacement of the component C. Referring to Fig. 7, the replacement of the component A is maintenance that is to be handled by an engineer and in this example, the maintenance to be handled by the engineer is displayed with priority.

In another example, an acquired image has a defect that matches the component D in periodicity. In such a case, the cause diagnosis unit 25 identifies the component D to be a candidate of a component to be replaced. The periodicity of the defect is closer to the periodicity of a component F and the cause diagnosis unit 25 identifies the component F to be a candidate of a component to be replaced. For example, the cause diagnosis unit 25 may now identify adjustment E to be another candidate for maintenance. In such a case, the display order determining unit 26 calculates the priority level of each of the replacement of the component D, the adjustment E, and the replacement of the component F and determines the display order in order from high to low priority level.

Referring to Fig. 7, the difficulty level of the maintenance for the replacement of the component D is lower. The difficulty levels of maintenance for the adjustment E and the replacement of the component F are higher.

Since the defect matches the component D in periodicity, the index of periodicity is considered as having a greater effect in the replacement of the component D and the degree of the defect is determined to be a higher value. Since the defect is closer to the component F in periodicity, the index of periodicity is still considered as having a greater effect in the replacement of the component F, but the defect does not match the component F in periodicity. The degree of the defect is thus determined to be a value lower than in the replacement of the component D. On the other hand, the adjustment E has no relationship with the period of the defect. The degree of the defect has a value lower than in the replacement of the component F.

The display order determining unit 26 calculates the priority level by respectively multiplying the degree of the defect and the difficulty level of the maintenance by the weights illustrated in Fig. 7 and summing the resulting products. Depending on the difference in the degree of the defect, the priority level is thus calculated in the order from high to low, namely, in the order of the replacement of the component D, the adjustment E and the replacement of the component F. In this case, the display order determining unit 26 determines the display order of the replacement of the component D, the adjustment E and the replacement of the component F. As illustrated in Fig. 7, the replacement of the component D is maintenance executable by the user and the maintenance executable by the user is displayed with priority.

When the period of the defect matches the rotation period of a component, the possibility of a defect in the component is higher. For this reason, the degree of the defect is determined to be a higher value and the priority level of the replacement of the component having the matched period is calculated to be higher.

On the other hand, if the cause diagnosis unit 25 is unable to identify a candidate of a component to be replaced (no in step S1004), the cause diagnosis unit 25 determines whether a candidate for a method of adjustment has been identified (step S1005). If the cause diagnosis unit 25 has identified a candidate of a method of adjustment (yes in step S1005), the display order determining unit 26 determines the display order in accordance with the weights associated with the method of adjustment (step S1007).

Step S1007 is described in detail below. For example, the cause diagnosis unit 25 may now identify the adjustments H and I as candidates for maintenance. The cause diagnosis unit 25 may now also identify the replacement of the component G as a candidate for maintenance. In this case, the defect has no periodicity and the replacement of the component G is not a candidate having a possibility as high as in step S1006. The defect may now occur at a location characteristic of the relationship with the adjustment H.

Referring to Fig. 7, the difficulty levels of the replacement of the component G, the adjustment H and the adjustment I are lower.

The defect does not match the component G in periodicity and the degree of the defect is determined to be a lower value in the replacement of the component G. Since the defect has occurred at the location characteristic of the relationship with the adjustment H, the index of location is considered as having a greater effect and the degree of the defect is determined to be a higher value. The adjustment I may now be determined to be in the middle between the degrees of the defects of the replacement of the component G and the adjustment H.

The difficulty level of the maintenance plays a larger role than the degree of the defect when the priority levels of the replacement of the component G, the adjustment H and the adjustment I are calculated from the weights illustrated in Fig. 7. Since each of the difficulty levels of maintenance for the replacement of the component G, the adjustment H, and the adjustment I is "low," no difference occurs in the priority levels calculated from the difficulty levels of maintenance and the display order is determined from the degree of the defect.

The adjustment H has a higher degree of the defect and a higher value is calculated as the priority level. The adjustment H is then followed in priority level by the adjustment I and the replacement of the component G. Referring to Fig. 7, the adjustment H is maintenance executable by the user and in this example, and the maintenance executable by the user is displayed with priority.

If a defect occurs at a specific location related to a method of adjustment, the degree of the defect is calculated to be higher concerning a related method of adjustment. On the other hand, if a defect occurs at a random location, information on the location is not utilized and the degree of the defect has a lower value.

In the case of a similar defect handled in the image forming apparatus 10 of the same type in the past, the display order may be modified in accordance with past handling log. For example, in the case of the similar defect handled by the replacement of the component G in the past, the priority level of the replacement of the component G may be calculated to be higher. In such a case, the replacement of the component G to be handled by the engineer is displayed with priority.

If the cause diagnosis unit 25 has not successfully identified the candidate of the component to be replaced (no in step S1005), the display order determining unit 26 determines the display order in accordance with the difficulty level of the maintenance (step S1008). The cause diagnosis unit 25 may not successfully identify the candidate of the component to be replaced if the defect is visually inspectable but too tiny to be analyzed. In such a case, the display order determining unit 26 calculates the priority level in accordance with the difficulty level of the maintenance without regard to the degree of the defect.

If the cause diagnosis unit 25 is unable to identify a candidate of a component to be replaced, a predetermined method of maintenance may be cited as a candidate for maintenance. The cause diagnosis unit 25 indicates as a candidate for maintenance a method of maintenance that is easily adjustable by the user.

For example, adjustment J, adjustment K, and adjustment L may now be cited as candidates for maintenance. Referring to Fig. 7, the difficulty level of the maintenance related to each of the adjustment J, adjustment K, and adjustment L is "low." In such a case, the difficulty level of the maintenance is finely determined and used to calculate the priority level.

If a defect too tiny to analyze occurs, an adjustment is to be performed by the user without requesting the engineer to visit. Whether the adjustment is executable by the user is used to calculate the priority level. An index used to calculate the priority level is determined such that the priority level of the maintenance executable by the user becomes higher. The priority levels of the adjustment J and the adjustment K executable by the user are calculated to be higher than the priority level of the adjustment L to be handled by the engineer.

When the cause of the defect is visually identified by the engineer, this factor may be included in calculating the priority level. For example, the adjustment L may now be identified as a candidate for maintenance through the visual inspection of the engineer. In such a case, the priority level of the adjustment L to be handled by the engineer is calculated to be higher.

When the display order is determined, the output unit 27 outputs the diagnosis result (step S1009). The diagnosis result indicates candidates for maintenance in an order determined by the display order determining unit 26. The output unit 27 outputs the diagnosis result to the engineer terminal 40. The output unit 27 may output the diagnosis result to the user terminal 30.

The engineer determines whether the diagnosis result indicates the necessity of their visit. If a method of maintenance executable by the user is displayed with priority, the user executes the displayed method.

The determination process of the display order has been described for exemplary purposes only and the disclosure is not limited to the determination process. For example, the weights used to calculate the priority level may be varied in response to the degree of defect and the difficulty level of the maintenance.

The indexes determining the degree of the defect and the difficulty level of the maintenance are not limited to the indexes described above. For example, the degree of the defect may be determined in accordance with only the magnitude of the defect or in accordance with a combination of other indexes.

If the magnitude of the defect is higher, there is a higher possibility that any component is damaged. Even if a visit of the engineer is involved, the priority level of the replacement of a component that is likely to be damaged may be calculated to be higher. On the other hand, if the magnitude of the defect is lower, the defect is likely to be cleared through user adjustment. For this reason, the priority level of the adjustment executable by the user may be calculated to be higher.

Contribution level of the magnitude of the defect may thus be increased in the determination of the degree of the defect.

Components that are determined to be the highly likely cause of the defect through matching of periodicity or the like may include a periodic replacement component. In such a case, the priority level of the periodic replacement component replaceable by the user may be calculated to be higher than the priority level of the replacement of other components. Whether a replacement component is a periodic replacement component may be accounted for as a factor determining the difficulty level of the maintenance.

If the image forming apparatus 10 having a defect in an image is a multi-function monochrome apparatus, the user of the image forming apparatus 10 may be considered generous about the defect in the image. Even with the defect, the image forming apparatus 10 may be possibly continuously used. Necessity for repair may be low until a next visit of an engineer and the priority level of the maintenance executable by the user may be calculated to be higher. If the image forming apparatus 10 is the multi-function monochrome apparatus, the image forming apparatus 10 may be configured to determine the degree of the defect to be lower.

The defect detection unit 24 may erroneously detect a false defect. The defect detection unit 24 may fail to correctly perform detection even if not detecting the false detect, if the degree of the defect is too high or too low. In such a case, the image forming apparatus 10 may be configured not to use the index of the degree of the defect in the calculation of the priority level. The disclosure may be applicable a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A diagnostic system including:
   one or more processors configured to:
   acquire an image formed by an image forming apparatus;
   detect a defect in the image by analyzing the acquired image;
   identify candidates for maintenance related to the detected defect; and
   output a diagnosis result indicating the candidates for the maintenance in an order that is determined depending on whether a user of the image forming apparatus is enabled to execute the maintenance.
(((2))) In the diagnostic system according to (((1))), the one or more processors are configured to output, together with the diagnosis result, whether the user of the image forming apparatus is enabled to execute the maintenance.
(((3))) In the diagnostic system according to (((2))), the one or more processors are configured to cause a device of the user or of an engineer to display the diagnosis result.
(((4))) In the diagnostic system according to (((1))), the one or more processors are configured to determine the order in accordance with a degree of the defect.
(((5))) In the diagnostic system according to (((4))), the one or more processors are configured to output, if the degree of the defect is lower than a specific threshold, the diagnosis result indicating the candidates for the maintenance in the order starting from a candidate for the maintenance that the user is enabled to execute.
(((6))) In the diagnostic system according to (((1))), the one or more processors are configured to determine the order in accordance with a difficulty level of the maintenance.
(((7))) In the diagnostic system according to (((6))), the one or more processors are configured to output, if the difficulty level of the maintenance is lower than a specific threshold, the diagnosis result indicating the candidates for the maintenance in the order starting from a candidate for the maintenance that the user is enabled to execute .
(((8))) In the diagnostic system according to (((6))), the one or more processors are configured to determine the order by attaching a specific weight to the degree of the defect and the difficulty level of the maintenance.
(((9))) A program causing one or more computers to execute a process including:
   acquiring an image formed by an image forming apparatus;
   detecting a defect in the image by analyzing the acquired image;
   identifying candidates for maintenance related to the detected defect; and
   outputting a diagnosis result indicating the candidates for the maintenance in an order that is determined depending on whether a user of the image forming apparatus is enabled to execute the maintenance.

In the diagnostic system according to one of (((1))) and (((9))), the diagnostic system may reduce engineer visits to the user when the maintenance is executed in view of the diagnostic result of the image forming apparatus.

In the diagnostic system according to (((2))), the diagnostic system may recognize whether the user is enabled to execute the maintenance.

In the diagnostic system according to (((3))), the user or the engineer may recognize whether the user is enabled to execute the maintenance.

In the diagnostic system according to (((4))), the diagnostic system may determine the necessity of the visit of the engineer in response to the degree of the defect.

In the diagnostic system according to (((5))), the diagnostic system may reduce engineer visits if the degree of the defect is lower.

In the diagnostic system according to (((6))), the diagnostic system may determine the necessity of the visit of the engineer in response to the difficulty level of the maintenance.

In the diagnostic system according to (((7))), the diagnostic system may reduce visits of the engineer if the difficulty level of the maintenance is lower.

In the program according to (((8))), the program may change the magnitude of each of the degree of the defect and the difficulty level of the maintenance according to which the necessity of the visit of the engineer is determined.

## Claims

1. A diagnostic system comprising:
one or more processors configured to:
acquire an image formed by an image forming apparatus;
detect a defect in the image by analyzing the acquired image;
identify candidates for maintenance related to the detected defect; and
output a diagnosis result indicating the candidates for the maintenance in an order that is determined depending on whether a user of the image forming apparatus is enabled to execute the maintenance.

2. The diagnostic system according to claim 1, wherein the one or more processors are configured to output, together with the diagnosis result, whether the user of the image forming apparatus is enabled to execute the maintenance.

3. The diagnostic system according to either claim 1 or claim 2, wherein the one or more processors are configured to cause a device of the user or of an engineer to display the diagnosis result.

4. The diagnostic system according to any one of the preceding claims, wherein the one or more processors are configured to determine the order in accordance with a degree of the defect.

5. The diagnostic system according to any one of the preceding claims, in particular claim 4, wherein the one or more processors are configured to output, if the degree of the defect is lower than a specific threshold, the diagnosis result indicating the candidates for the maintenance in the order starting from a candidate for the maintenance that the user is enabled to execute.

6. The diagnostic system according to any one of the preceding claims, wherein the one or more processors are configured to determine the order in accordance with a difficulty level of the maintenance.

7. The diagnostic system according to any one of the preceding claims, in particular claim 6, wherein the one or more processors are configured to output, if the difficulty level of the maintenance is lower than a specific threshold, the diagnosis result indicating the candidates for the maintenance in the order starting from a candidate for the maintenance that the user is enabled to execute.

8. The diagnostic system according to any one of the preceding claims, in particular claim 6, wherein the one or more processors are configured to determine the order by attaching a specific weight to the degree of the defect and the difficulty level of the maintenance.

9. A program causing one or more computers to execute a process, the process comprising:
acquiring an image formed by an image forming apparatus;
detecting a defect in the image by analyzing the acquired image;
identifying candidates for maintenance related to the detected defect; and
outputting a diagnosis result indicating the candidates for the maintenance in an order that is determined depending on whether a user of the image forming apparatus is enabled to execute the maintenance.

10. A diagnostic method comprising:
acquiring an image formed by an image forming apparatus;
detecting a defect in the image by analyzing the acquired image;
identifying candidates for maintenance related to the detected defect; and
outputting a diagnosis result indicating the candidates for the maintenance in an order that is determined depending on whether a user of the image forming apparatus is enabled to execute the maintenance.
